# EUROPÄISCHE PATENTSCHRIFT

(11) **EP 1 318 177 B1**
(45) Veröffentlichungstag und Bekanntmachung des Hinweises auf die Patenterteilung: **22.09.2004**
(21) Anmeldenummer: 02026999.9
(22) Anmeldetag: 05.12.2002
(51) Int. Cl.: C09B 23/10, G01N 33/533, G01N 33/58, C12Q 1/68

(54) **Verbindung, insbesondere Marker-Farbstoff, auf der Basis von Polymethinen**
Compound, in particular marker-dye, based on polymethines
Composé, en particulier colorant marqueur, à base de polyméthines

(30) Priorität: 05.12.2001 DE 10160524
(43) Veröffentlichungstag der Anmeldung: 11.06.2003
(73) Patentinhaber: Dyomics GmbH, 07745 Jena (DE)
(72) Erfinder: Czerney, Peter, Dr., 99425 Weimar (DE); Wenzel, Matthias, Dr., 07749 Jena (DE); Schweder, Bernd, Dr., 07743 Jena (DE); Lehmann, Frank, Dr., 07749 Jena (DE)
(74) Vertreter: Popp, Eugen, Dr.

(56) Entgegenhaltungen:
- WO-A-00/53678
- US-A- 4 886 744
- US-A- 5 627 027
- US-A- 6 096 794
- LEHMANN F ET AL: "Synthesis of Amphiphilic Styrylpyridinium and Styrylquinolinium Hemicyanines and Merocyanines" DYES AND PIGMENTS, ELSEVIER APPLIED SCIENCE PUBLISHERS. BARKING, GB, Bd. 29, Nr. 1, 1995, Seiten 85-94, XP004033201 ISSN: 0143-7208
- PATENT ABSTRACTS OF JAPAN vol. 1996, no. 01, 31. Januar 1996 (1996-01-31) -& JP 07 234504 A (TOYO GOSEI KOGYO KK), 5. September 1995 (1995-09-05)
- G.J. ASHWELL ET AL.: "An improved efficiency/transparency trade-off..." JOURNAL OF MATERIALS CHEMISTRY., Bd. 11, Nr. 5, 2001, Seiten 1345-50, XP008017369 THE ROYAL SOCIETY OF CHEMISTRY, CAMBRIDGE., GB ISSN: 0959-9428
- R.M. ABD EL-AAL ET AL.: "Synthesis, Absorption Spectra Studies and Biological Activity of Some Novel Conjugated Dyes" JOURNAL OF THE CHINESE CHEMICAL SOCIETY., Bd. 47, Nr. 2, 2000, Seiten 389-395, XP008017375 Taipei ISSN: 0009-4536
- GRUMMT U-W ET AL: "New near-infrared-absorbing acidochromic dyes and their application in sensor techniques" SENSORS AND ACTUATORS B, ELSEVIER SEQUOIA S.A., LAUSANNE, CH, Bd. 39, Nr. 1-3, 1. März 1997 (1997-03-01), Seiten 395-400, XP004087779 ISSN: 0925-4005

## Beschreibung

Die Erfindung betrifft sogenannte Fluoreszenzfarbstoffe (Fluorophore) auf der Basis von Polymethinen zur Verwendung in optischen, insbesondere fluoreszenzoptischen Bestimmungs- und Nachweisverfahren. Typische Verfahrensanwendungen beruhen auf der Reaktion von farbstoffmarkierten Antigenen, Antikörpern oder DNA-Segmenten mit der jeweils komplementären Spezies. Damit werden unter anderem Messungen von Enzymkinetiken, Rezeptor-Ligand-Interaktionen und Nucleinsäure-Hybridisierungskinetiken ermöglicht. Desweiteren sind die beanspruchten Fluorophore für die pharmakologische Charakterisierung von Rezeptoren oder Wirkstoffen interessant.

Einsatzmöglichkeiten ergeben sich dadurch beispielsweise in der Medizin und Pharmazie, in der Bio- und Materialwissenschaft, bei der Umweltkontrolle und dem Nachweis von in der Natur und Technik vorkommenden organischen und anorganischen Mikroproben sowie anderes mehr.

Während Cyanine mit einem Stoke's-Shift von 20 - 40 nm als Fluoreszenzmarker seit langem bekannt sind (Cy3, Cy5, US-PS 5 627 027), gibt es bisher nur wenig Fluorophore mit einem großen Stoke's-Shift. Einige typische Beispiele hierfür sind die vom Laserfarbstoff DCM abgeleiteten Marker mit Absorptionsmaxima bei 481 nm und Emissionsmaxima bei 644 nm, die in der US-PS 4 886 744 beansprucht sind.

Die WO, A, 00 53678 offenbart Laser, Kompatible NIR-Marker-Farbstoffe auf der Basis von Polymethinen mit hoher Photo- und Lagerstabilität sowie hoher Fluoreszenz ausbeute.

Unterschiedliche Stilbene mit großem Stoke's Shift wurden bisher in dem von F. Lehmann et al. in "Dyes and Pigments", Elsevier Applied Science Publishers, Bd. 29, Nr. 1, 1995, Seiten 85-94 sowie in dem von G.J. Ashwell et al. "Journal of Materials Chemistry", Cambridge, Bd. 11, Nr. 5, 2001, Seiten 1345-50, publizierten Artikeln beschrieben. Hydroxysubstituierte Stilbene mit einer Lactonverbrückung wurden bisher von R.M. Abd El-Aal et al. im "Journal of the Chinese Chemical Society", Taipei, Bd. 47, Nr. 2, 2000, Seiten 389-95 publiziert. Weitere in Betracht zu ziehende unterschiedliche Stilbene wurden von Czerney et al. in "Sensors and Actuators B", Elsevier, Lausanne, Bd. 39, Nr. 1-3, 1997, Seiten 395-400 und in der US-PS 6 096 794 publiziert.

Allen Verbindungen gemeinsam ist, daß sie keine reaktive Gruppe aufweisen, die die kovalente Anbindung an z.B. Biomoleküle gestattet. Ein weiterer Nachteil ist, daß die Löslichkeit in Wasser oder wäßrigen Medien für Applikationen in der Bioanalytik nicht ausreichend ist.

Die in der japanischen Offenlegungsschrift JP 07-234 504 offenbarten Verbindungen enthalten zwar eine -SO₃⁻-Gruppe, weisen aber eine gänzlich andere Struktur auf als die erfindungsgemäßen Verbindungen I bis III. Sie unterscheiden sich von diesen dadurch, daß sie für Anwendungen in der Bioanalytik und Diagnostik nicht geeignet sind, weil ihnen eine Funktion fehlt, die eine kovalente Anbindung an Biomoleküle ermöglicht.

Der Erfindung liegt die Aufgabe zugrunde, Fluoreszenzmarker auf der Basis von Polymethinen mit großem Stoke's-Shift, mit hoher Photo- und Lagerstabilität sowie hoher Fluoreszenzquantenausbeute zu schaffen. Um ein optimales Signal/Rausch-Verhältnis zu erreichen, sollten die Emissionsbanden im Bereich > 520 nm liegen und die Anregung auf möglichst einfache Weise durch Weißlicht- oder Laser-Strahlung im UV- oder sichtbaren Spektralbereich realisiert werden. Die Fluorophore müssen eine vom pH-Wert und anderen Umwelteinflüssen unabhängig hohe Fluoreszenz aufweisen. Voraussetzung für die kovalente Anbindung ist das Vorhandensein einer reaktiven Funktion, die unter physiologischen Bedingungen bzw. unter den bei der Festphasensynthese von Biooligomeren üblichen Reaktionsbedingungen mit dem zu markierenden Biomolekül reagiert.

Die vorliegende Erfindung beschreibt Verbindungen, insbesondere Marker-Farbstoffe, auf der Basis von Polymethinen der allgemeinen Formeln I oder II oder III 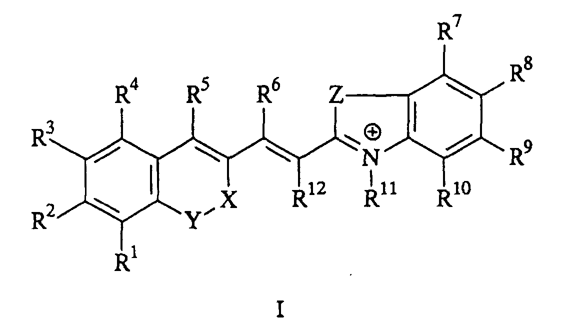 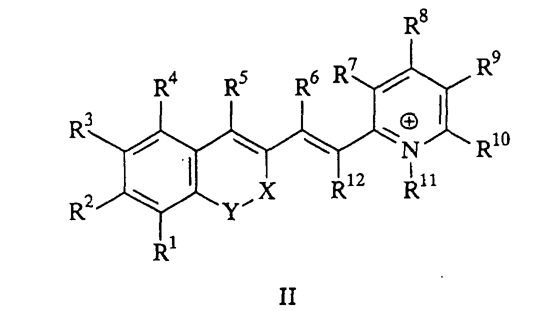 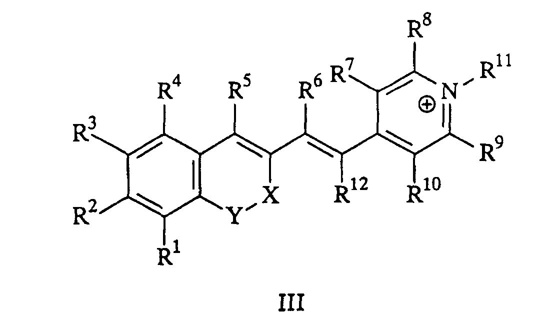
- wobei R¹- R¹² gleich oder unterschiedlich sind und Wasserstoff, ein oder mehrere Chlor- und/oder Bromatome, Alkyl-, Aryl-, Heteroaryl-, Cycloalkyl-, Heterocycloalkyl-, Alkyloxy-, Alkylmercapto-, Aryloxy-, Arylmercapto-, Heteroaryloxy-, Heteroarylmercapto- oder Cyano-Reste, eine oder mehrere Hydroxy-, eine oder mehrere alkylsubstituierte oder cyclische Aminofunktionen sein können,
- einer oder mehrere der Substituenten R¹ - R¹² solubilisierende bzw. ionisierbare bzw. ionisierte Substituenten wie SO₃⁻, PO₃²⁻, CO₂⁻, O⁻, NR₃⁺, Cyclodextrin oder Zucker darstellen, die die hydrophilen Eigenschaften der Farbstoffe bestimmen, wobei diese Substituenten auch über eine aliphatische oder heteroaliphatische, möglicherweise zyklische Spacergruppe am eigentlichen Chromophor angebunden sein können,
- mindestens einer der Substituenten R¹ - R¹² für eine reaktive Gruppe vom Typ Isocyanat, Isothiocyanat, Hydrazin, Amin, Mono- und Dichlor- bzw. Mono- und Dibromtriazin, Aziridin, Sulfonylhalogenid, *N*-Hydroxysuccinimidester, Imido-Ester, Glyoxal oder Aldehyd bzw. Maleimid oder Iodacetamid sowie Phosphoramidit steht, wobei der jeweilige Substituent über eine aliphatische oder heteroaliphatische, möglicherweise zyklische Spacergruppe am eigentlichen Grundchromophor angebunden sein kann,
- R¹ und R² und/oder R³ und R⁴ und/oder R⁷ und R⁸ und/oder R⁹ und R¹⁰ weitere aliphatische oder aromatische Ringe bzw. zwei benachbarte Reste, z.B. R⁵ und R⁶ und in I bzw. II R¹¹ und R¹² zusammen einen oder mehrere aliphatische oder aromatische Ringe bilden können,
- X-Y für die Strukturelemente -CR₂-O-, -O-CR₂-, -CO-O-, -O-CO-, -CO-NR- oder - NR-CO- stehen oder, wobei R gleich oder unterschiedlich die Funktionen von R¹ - R¹² einnehmen, oder
- X-Y zusammen für ein Element aus der Gruppe O, S, Se, Te, oder das Strukturelement (CR₂)ₙ, NR oder SO₂ stehen , wobei R gleich oder unterschiedlich die Funktionen von R¹ - R¹² einnimmt und n für 1 - 4 steht, und
- Z für die Gruppe C(CH₃)₂ steht.

Bevorzugte Verbindungen sind solche, in denen X-Y zusammen -CO-0- oder -0- bilden. Andere bevorzugte Verbindungen sind solche, in denen R⁵ H, OH oder Alkoxy und/oder in denen R¹¹ Carboxyalkyl darstellt. Wieder andere bevorzugte Verbindungen sind solche, in denen die aliphatische oder heteroaliphatische Spacergruppe aus einem Strukturelement -[(CH₂)ₐ-W-(CH₂)_{b}]_{c}- besteht, worin W gleich oder verschieden eine CR₂-, O-, S-, SO₂, SO₂NH-, NR-, COO- oder CONR-Funktion sein kann, wobei R die Funktionen von R¹ - R¹² einnehmen kann und a und b gleich oder verschieden die Werte von 0 - 18 und c die Werte von 1-18 darstellen.

Die substituierten Polymethin-Derivate der allgemeinen Formeln I - III können als Farbstoffe zur optischen Markierung von Proteinen, Nukleinsäuren, Oligomeren, DNA, RNA, biologischen Zellen, Lipiden, Mono-, Oligo- und Polysacchariden, Liganden, Rezeptoren, Polymeren, Pharmaka oder Polymerpartikeln verwendet werden.

Die substituierten Polymethin-Derivate der allgemeinen Formeln I - III können als Farbstoffe auch in Systemen zur qualitativen oder quantitativen Bestimmung von Proteinen, Nukleinsäuren, Oligomeren, DNA, RNA, biologischen Zellen, Lipiden, Polymeren, Pharmaka oder Polymerpartikeln in der Weise verwendet werden, daß die funktionellen Gruppen kovalent an eine HO-, H₂N- oder HS-Funktion der zu bestimmenden Substanzen gekoppelt werden. Dabei kann die Kopplungsreaktion in organischen oder wäßrigen Lösungen durchgeführt werden; hierbei weisen die aus substituierten Polymethin-Derivaten der allgemeinen Formeln I - III und Biomolekülen bestehenden Konjugate bevorzugt fluoreszierende Eigenschaften auf.

Die erfindungsgemäßen substituierten Polymethin-Derivate der allgemeinen Formeln I - III und Systeme lassen sich mit Vorteil in optischen, insbesondere fluoreszenzoptischen qualitativen und quantitativen Bestimmungsverfahren einschließlich Immuntests, Hybridisierungsverfahren, DNA-Sequenzierung, chromatographischen oder elektrophoretischen Verfahren, im Hoch-Durchsatz-Screening und zur Analyse von Rezeptor-Liganden-Wechselwirkungen auf einem Mikroarray verwenden.

Die Polymethine der allgemeinen Formeln I - III können als Farbstoffe zur optischen Markierung von organischen oder anorganischen Erkennungseinheiten, z. B. von Aminosäuren, Peptiden, Proteinen, Antigenen, Haptenen, Enzymsubstraten, Enzym-Cofaktoren, Biotin, Carotinoiden, Hormonen, Neurohormonen, Neurotransmittern, Wachstumsfaktoren, Lympholocinen, Lectinen, Toxinen, Kohlenhydraten, Oligosacchariden, Polysacchariden, Dextranen, Nucleinsäuren, Oligonucleotiden, DNA, RNA, biologischen Zellen, Lipiden, rezeptorbindenden Pharmaka oder organischen bzw. anorganischen polymeren Trägermaterialien verwendet werden.

Die Markierung der Erkennungseinheiten kann dabei durch die Ausbildung von ionischen Wechselwirkungen zwischen den Markern der allgemeinen Formeln I - III und den zu markierenden Materialien erfolgen.

Weiterhin besteht auch die Möglichkeit, die Erkennungseinheit oder das Trägermaterial kovalent mit dem Fluorophor zu verbinden. Diese Kopplungsreaktion kann in wäßriger oder überwiegend wäßriger Lösung und vorzugsweise bei Raumtemperatur durchgeführt werden. Dabei entsteht eine Fluoreszenz-Sonde (Konjugat) zur qualitativen oder quantitativen Bestimmung von unterschiedlichen Biomaterialien bzw. anderen organischen und anorganischen Materialien.

Sowohl die Verbindungen der allgemeinen Formeln I - III und davon abgeleitete Systeme können in optischen, insbesondere fluoreszenzoptischen, qualitativen und quantitativen Bestimmungsverfahren zur Diagnostik von Zelleigenschaften, in Biosensoren (*point of care*-Messungen), zur Erforschung des Genoms (DNA-Sequenzierung) und in Miniaturisierungstechnologien eingesetzt werden. Typische Anwendungen erfolgen in der Zytometrie und Zellsortierung, der Fluoreszenz-Korrelations-Spektroskopie (FCS), im *Ultra-High-Throughput-Screening* (UHTS), bei der *multicolor* Fluoreszenz*-insitu-*Hybridisierung (FISH) und in Mikroarrays (DNA- und Protein-Chips).

Dabei ist ein Mikroarray eine rasterartige Anordnung von auf mindestens einer Oberfläche immobilisierten Molekülen, die zum Studium von Rezeptor-Liganden-Wechselwirkungen verwendet werden können. Eine rasterartige Anordnung bedeutet mehr als zwei voneinander verschiedene Moleküle, welche sich innerhalb einer Fläche befinden und dort in unterschiedlichen, vorher definierten Regionen mit bekannter Position immobilisiert sind.

Ein Rezeptor ist ein Molekül, das eine Affinität zu einem gegebenen Liganden besitzt. Rezeptoren können natürlich vorkommende oder künstlich hergestellte Moleküle sein. Rezeptoren können in reiner Form oder gebunden an andere Spezies eingesetzt werden. Rezeptoren können kovalent oder nichtkovalent entweder direkt oder durch bestimmte Kopplungsvermittler an einen Bindungspartner angeknüpft werden.

Beispiele für Rezeptoren, die durch diese Erfindung detektiert werden können, schließen Agonisten und Antagonisten für Zell-Membran-Rezeptoren, Toxine und andere Giftstoffe, virale Epitope, Hormone wie Opiate und Steroide, Hormonrezeptoren, Peptide, Enzyme, Enzymsubstrate, als Kofaktoren agierende Wirkstoffe, Lektine, Zucker, Oligonukleotide, Nukleinsäuren, Oligosaccharide, Zellen, Zellfragmente, Gewebefragmente, Proteine und Antikörper ein, sind aber nicht auf die angeführten Stoffe beschränkt.

Ein Ligand ist ein Molekül, das von einem bestimmten Rezeptor erkannt wird. Beispiele für Liganden, die durch diese Erfindung detektiert werden können, schließen Agonisten und Antagonisten für Zell-Membran-Rezeptoren, Toxine und andere Giftstoffe, virale Epitope, Hormone wie Opiate und Steroide, Hormonrezeptoren, Peptide, Enzyme, Enzymsubstrate, als Kofaktoren agierende Wirkstoffe, Lektine, Zucker, Oligonukleotide, Nukleinsäuren, Oligosaccharide, Proteine und Antikörper ein, sind aber nicht auf die angeführten Stoffe beschränkt.

Durch die Darstellung von nichtsymmetrischen Polymethinen, die einerseits als terminale Funktion einen leicht derivatisierbaren Heterocyclus vom Typ CH-acider Verbindungen, andererseits einen neuartig substituierten 6-Ringheterocyclus aufweisen, werden insbesondere nachfolgende Vorteile erreicht:

Bei geeigneter Substitution liegen die Absorptionsmaxima im Bereich der Emission der Laserwellenlänge vom Argon-Ion-Laser (488 nm) und die Emissionsmaxima werden im Bereich zwischen 550 und 660 nm beobachtet.

Ein weiterer Vorteil besteht darin, daß der hydrophile Charakter der unterschiedlich emittierenden Fluorophore nahezu identisch gestaltet werden kann.

Allgemeine Vorschrift zur Darstellung der Farbstoffe:

0,2 mmol des substituierten Coumarin-3-carbaldehydes beziehungsweise 0,2 mmol des Benzofuran-2-carbaldehydes und 0,2 mmol der entsprechenden CH-aktiven Verbindung werden in 5 ml Acetanhydrid 10 Stunden rückfließend erhitzt. Nach dem Abkühlen wird Ether zugegeben und der entstandene Niederschlag isoliert und säulenchromatographisch gereinigt.

### Ausführungsbeispiel 1:

### 1-(5-Carboxy-pentyl)-2-[(E)-2-(7-diethylamino-2-oxo-2H-chromen-3-yl)-vinyl]-pyridinium-Bromid

0,2 mmol 7-Diethylamino-2-oxo-2H-chromen-3-carbaldehyd und 0,2 mmol 1-(5-Carboxy-pentyl)-2-methyl-pyridinium Bromid werden entsprechend der allgemeinen Vorschrift 1 umgesetzt. Säulenchromatographie: SiO₂, Eluent: Ethanol/Toluol. 35% Ausbeute,
MS (ESI+): 435 (M⁺), UV-Vis (in Ethanol): λₘₐₓ 480 nm, λₑₘ 600 nm

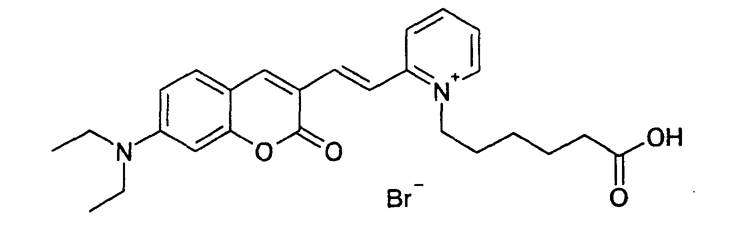

### Ausführungsbeispiel 2

### 1-(5-Carboxy-pentyl)-2-[(E)-2-(7-diethylamino-2-oxo-2H-chromen-3-yl)-vinyl]-5-sulfonato-pyridinium-Betain

0,2 mmol 7-Diethylamino-2-oxo-2H-chromen-3-carbaldehyd und 0,2 mmol 1-(5-Carboxy-pentyl)-2-methyl-5-sulfonato-pyridinium-Betain werden entsprechend der allgemeinen Vorschrift 1 umgesetzt. Säulenchromatographie: SiO₂ (RP18), Eluent: Methanol/Wasser.
30% Ausbeute, MS (ESI+): 537 (M+Na⁺), UV-Vis (in Wasser): λₘₐₓ 505 nm, λₑₘ 640 nm

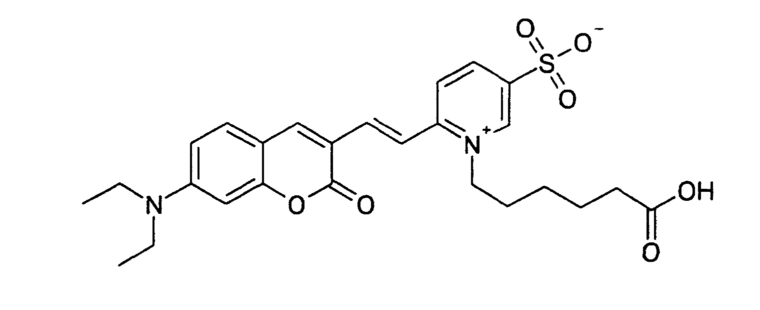

### Ausführungsbeispiel 3

### 1-(5-Carboxy-pentyl)-4-[(E)-2-(7-diethylamino-2-oxo-2H-chromen-3-yl)-vinyl]-pyridinium-Bromid

0,2 mmol 7-Diethylamino-2-oxo-2H-chromen-3-carbaldehyd und 0,2 mmol 1-(5-Carboxy-pentyl)-4-methyl-pyridinium-Bromid werden entsprechend der allgemeinen Vorschrift 1 umgesetzt. Säulenchromatographie: SiO₂, Eluent: Ethanol/Toluol. 42% Ausbeute, MS (ESI+): 435 (M⁺), UV-Vis (in Ethanol): λₘₐₓ 500 nm, λₑₘ 630 nm

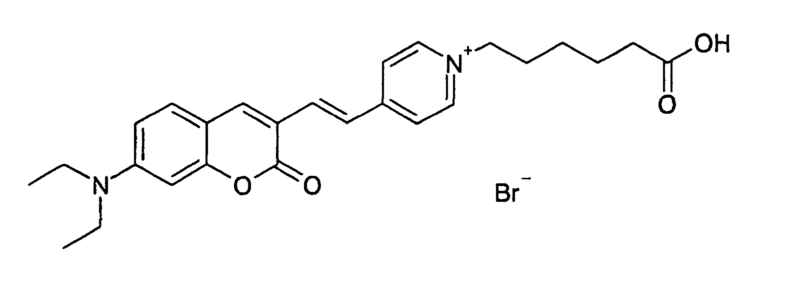

### Ausführungsbeispiel 4

### 1-(5-Carboxy-pentyl)-4-((E)-2-{7-[ethyl-(3-sulfonatopropyl)-amino]-2-oxo-2Hchromen-3-yl}-vinyl)-pyridinium-Betain

0,2 mmol 3-[Ethyl-(3-formyl-2-oxo-2H-chromen-7-yl)-amino]-propan-1-sulfonsäure Natriumsalz und 0,2 mmol 1-(5-Carboxy-pentyl)-4-methyl-pyridinium Bromid werden entsprechend der allgemeinen Vorschrift 1 umgesetzt. Säulenchromatographie: SiO₂ (RP18), Eluent: Methanol/Wasser.
.28% Ausbeute, MS (ESI-): 527 (M-H⁺), UV-Vis (in Wasser): λₘₐₓ 480 nm, λₑₘ 624 nm

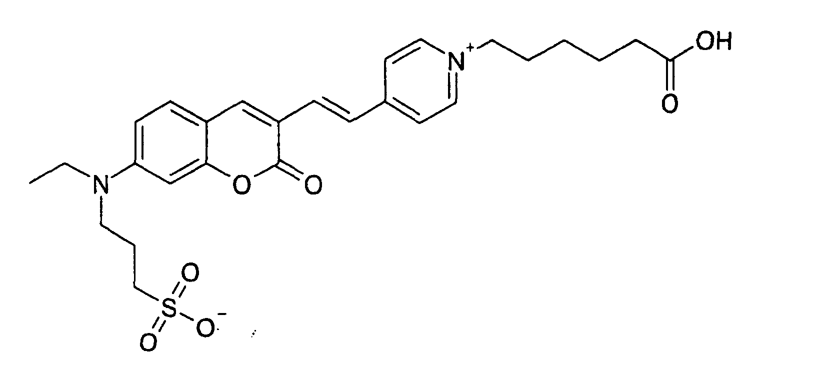

### Ausführungsbeispiel 5

### 1-(5-Carboxy-pentyl)-4-[(E)-2-(7-diethylamino-2-oxo-2H-chromen-3-yl)-vinyl]-3-sulfonato-pyridinium-Betain

0,2 mmol 7-Diethylamino-2-oxo-2H-chromen-3-carbaldehyd und 0,2 mmol 1-(5-Carboxy-pentyl)-3-sulfonato-4-methyl-pyridinium Betain werden entsprechend der allgemeinen Vorschrift 1 umgesetzt. Säulenchromatographie: SiO₂ (RP18), Eluent: Methanol/Wasser.
30% Ausbeute, MS (ESI+): 537 (M+Na⁺), UV-Vis (in Wasser): λₘₐₓ 524 nm, λₑₘ 660 nm

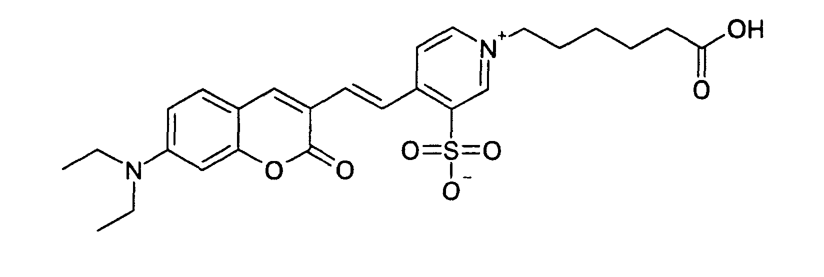

### Ausführungsbeispiel 6

### 1-(5-Carboxy-pentyl)-4-[(E)-2-(7-diethylamino-4-methoxy-2-oxo-2H-chromen-3-yl)-vinyl]-3-sulfonato-pyridinium-Betain

0,2 mmol 7-Diethylamino-4-(1-morpholino)-2-oxo-2H-chromen-3-carbaldehyd und 0,2 mmol 1-(5-Carboxy-pentyl)-3-sulfonato-4-methyl-pyridinium-Betain werden in Methanol in Gegenwart von Triethylamin umgesetzt. Säulenchromatographie: SiO₂ (RP18), Eluent: Methanol/Wasser.
10% Ausbeute, MS (ESI+): 567 (M+Na⁺), UV-Vis (in Wasser): λₘₐₓ 505 nm, λₑₘ 645 nm

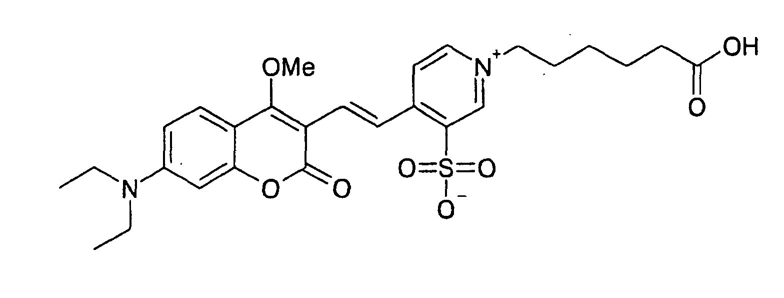

### Ausführungsbeispiel 7

### 1-(5-Carboxy-pentyl)-4-[(E)-2-(7-diethylamino-4-hydroxy-2-oxo-2H-chromen-3-yl)-vinyl]-3-sulfonato-pyridinium-Betain

0,2 mmol 7-Diethylamino-4-(1-morpholino)-2-oxo-2H-chromen-3-carbaldehyd und 0,2 mmol 1-(5-Carboxy-pentyl)-3-sulfonato-4-methyl-pyridinium-Betain werden in Methanol/Wasser-Mischung in Gegenwart von Triethylamin umgesetzt.
Säulenchromatographie: SiO₂ (RP18), Eluent: Methanol/Wasser.
15% Ausbeute, MS (ESI-): 529 (M-H⁺), UV-Vis (in Wasser): λₘₐₓ 500 nm, λₑₘ 590 nm

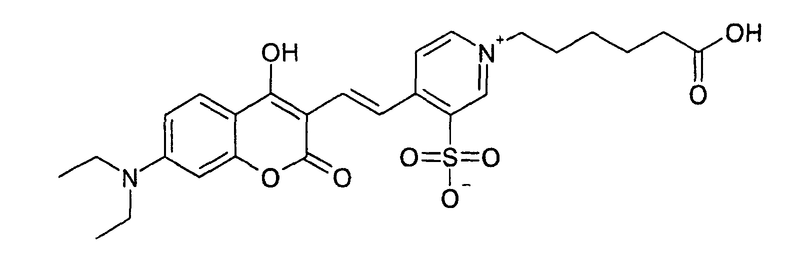

### Ausführungsbeispiel 8

### 1-(5-Carboxy-pentyl)-2-[(E)-2-(7-diethylamino-4-hydroxy-2-oxo-2H-chromen-3-yl)-vinyl]-3,3-dimethyl-5-sulfonato-3H-indolium Betain

0,2 mmol 7-Diethylamino-4-hydroxy-2-oxo-2H-chromen und 0,2 mmol 1-(5-Carboxypentyl)-3,3-dimethyl-2-((E)-2-phenylamino-vinyl)-5-sulfonato-3H-indolium-Betain werden entsprechend der allgemeinen Vorschrift 1 umgesetzt. Säulenchromatographie: SiO₂ (RP18), Eluent: Methanol/Wasser.
35% Ausbeute, MS (ESI-): 595 (M-H⁺), UV-Vis (in Wasser): λₘₐₓ 505 nm, λₑₘ 600 nm

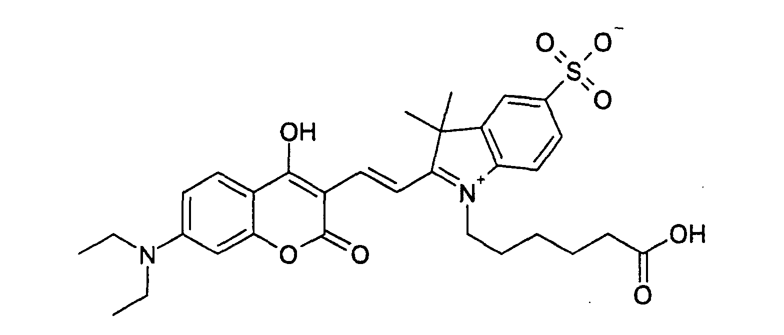

### Ausführungsbeispiel 9

### 1-(5-Carboxy-pentyl)-4-[(E)-2-(7-diethylamino-2-oxo-2H-chromen-3-yl)-vinyl]-chinolinium-Bromid

0,2 mmol 7-Diethylamino-2-oxo-2H-chromen-3-carbaldehyd und 0,2 mmol 1-(5-Carboxy-pentyl)-4-methyl-chinolinium-Bromid werden entsprechend der allgemeinen Vorschrift 1 umgesetzt. Säulenchromatographie: SiO₂, Eluent: Ethanol/Toluol.
30% Ausbeute, MS (ESI+): 485 (M⁺), UV-Vis (in Methanol): λₘₐₓ 540 nm, λₑₘ 695 nm

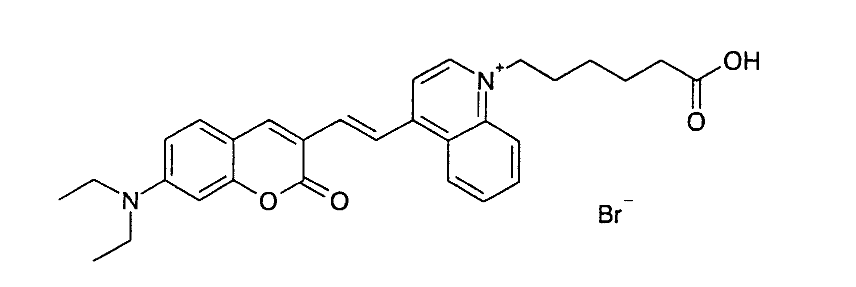

### Ausführungsbeispiel 10

### 1-(5-Carboxy-pentyl)-4-[(E)-2-(7-diethylamino-2-oxo-2H-chromen-3-yl)-vinyl]-6-sulfochinolinium-Betain

0,2 mmol 7-Diethylamino-2-oxo-2H-chromen-3-carbaldehyd und 0,2 mmol 1-(5-Carboxy-pentyl)-4-methyl-6-sulfonato-chinolinium-Betain werden entsprechend der allgemeinen Vorschrift 1 umgesetzt. Säulenchromatographie: SiO₂ (RP18), Eluent: Methanol/Wasser.
20% Ausbeute, MS (ESI+): 465 (M+H⁺) und 587 (M+Na⁺), UV-Vis (in Methanol): λₘₐₓ 555 nm, λₑₘ 715 nm

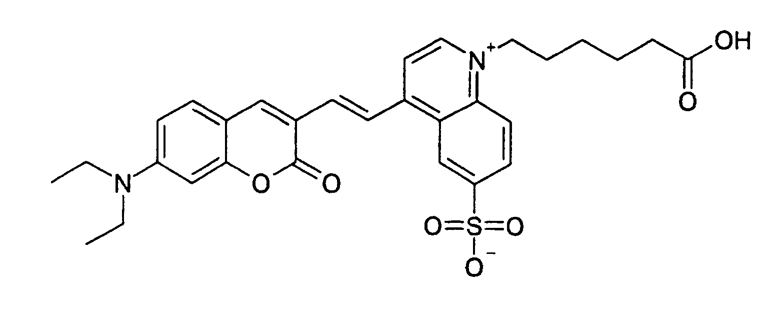

### Ausführungsbeispiel 11

### 1-(5-Carboxy-pentyl)-2-[(E)-2-(7-diethylamino-2-oxo-2H-chromen-3-yl)-vinyl]-6-methyl-chinolinium-Bromid

0,2 mmol 7-Diethylamino-2-oxo-2H-chromen-3-carbaldehyd und 0,2 mmol 1-(5-Carboxy-pentyl)-4,6-dimethyl-chinolinium-Bromid werden entsprechend der allgemeinen Vorschrift 1 umgesetzt. Säulenchromatographie: SiO₂ (RP18), Eluent: Methanol/Wasser.
10% Ausbeute, MS (ESI+): 499 (M⁺), UV-Vis (in Methanol): λₘₐₓ 520 nm, λₑₘ 655 nm

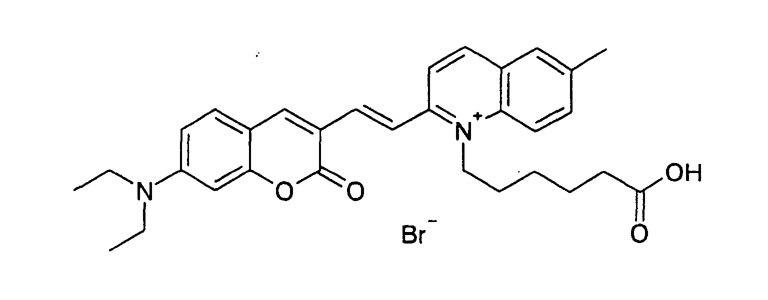

### Ausführungsbeispiel 12

### 1-(5-Carboxy-pentyl)-2-[(E)-2-(6-diethylamino-benzofuran-2-yl)-vinyl]-5-sulfonatopyridinium-Betain

0,2 mmol 6-Diethylamino-benzofuran-2-carbaldehyd und 0,2 mmol 1-(5-Carboxypentyl)-2-methyl-5-sulfonato-pyridinium-Betain werden entsprechend der allgemeinen Vorschrift 1 umgesetzt. Säulenchromatographie: SiO₂ (RP18), Eluent: Methanol/Wasser.
10% Ausbeute, MS (ESI+): 487 (M+H⁺) und 509 (M+Na⁺), UV-Vis (in Wasser): λₘₐₓ 560 nm, λₑₘ 690 nm

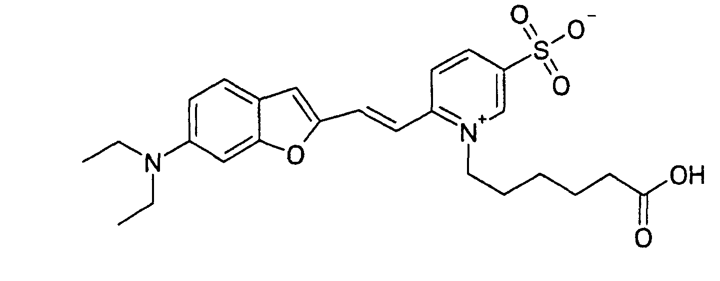

### Ausführungsbeispiel 13

### 1-(5-Carboxy-pentyl)-4-[(E)-2-(6-diethylamino-benzofuran-2-yl)-vinyl]-3-sulfonatopyridinium-Betain

0,2 mmol 6-Diethylamino-benzofuran-2-carbaldehyd und 0,2 mmol 1-(5-Carboxypentyl)-4-methyl-3-sulfonato-pyridinium-Betain werden entsprechend der allgemeinen Vorschrift 1 umgesetzt. Säulenchromatographie: SiO₂ (RP18), Eluent: Methanol/Wasser.
15% Ausbeute, MS (ESI+): 487 (M+H⁺) und 509 (M+Na⁺), UV-Vis (in Wasser): λₘₐₓ 530 nm, λₑₘ 730 nm

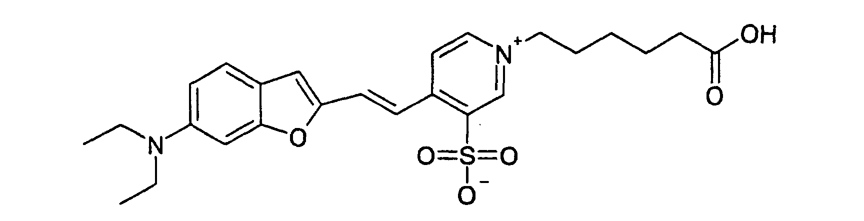

### Ausführungsbeispiel 14

### 1-(5-Carboxy-pentyl)-4-[(E)-2-(6-diethylamino-benzofuran-2-yl)-vinyl]-6-sulfonatochinolinium-Betain

0,2 mmol 6-Diethylamino-benzofuran-2-carbaldehyd und 0,2 mmol 1-(5-Carboxypentyl)-4-methyl-6-sulfonato-chinolinium-Betain werden entsprechend der allgemeinen Vorschrift 1 umgesetzt. Säulenchromatographie: SiO₂ (RP18), Eluent: Methanol/Wasser.
18% Ausbeute, MS (ESI+): 537 (M+H⁺) und 559 (M+Na⁺), UV-Vis (in Methanol): λₘₐₓ 630 nm, λₑₘ 800 nm

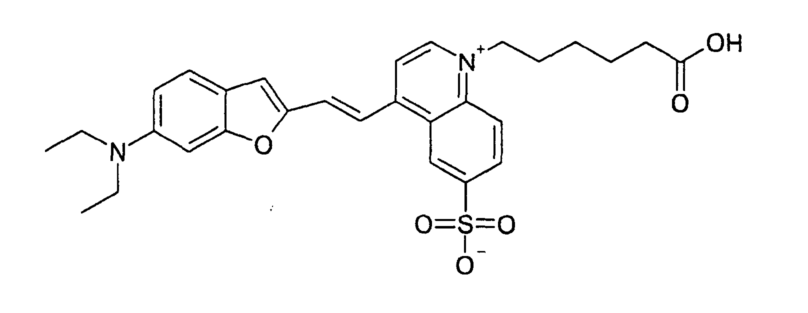

### Ausführungsbeispiel 15

### 1-(5-Carboxy-pentyl)-2-[(E)-2-(6-diethylamino-benzofuran-2-yl)-vinyl]-3,3-dimethyl-5-sulfonato-3H-indolium-Betain

0,2 mmol 6-Diethylamino-benzofuran-2-carbaldehyd und 0,2 mmol 1-(5-Carboxypentyl)-2,3,3-trimethyl-5-sulfonato-3H-indolium-Betain werden entsprechend der allgemeinen Vorschrift 1 umgesetzt. Säulenchromatographie: SiO₂ (RP18), Eluent: Methanol/Wasser.
12% Ausbeute, MS (ESI+): 553 (M+H⁺) und 575 (M+Na⁺), UV-Vis (in Wasser): λₘₐₓ 650 nm, λₑₘ 715 nm

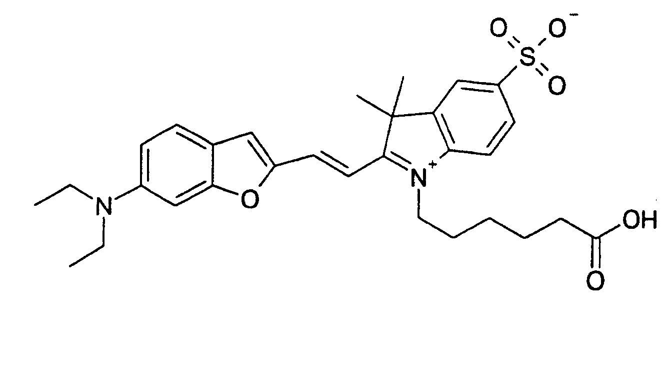

## Patentansprüche

1. Verbindungen, insbesondere Marker-Farbstoffe, auf der Basis von Polymethinen der allgemeinen Formeln **I - III** 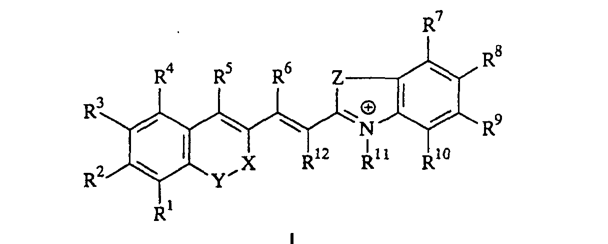 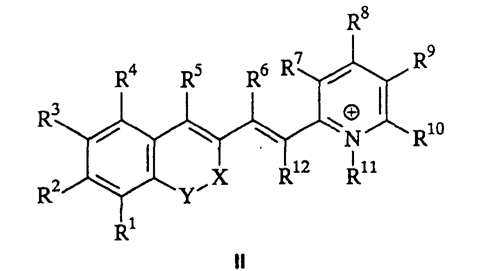 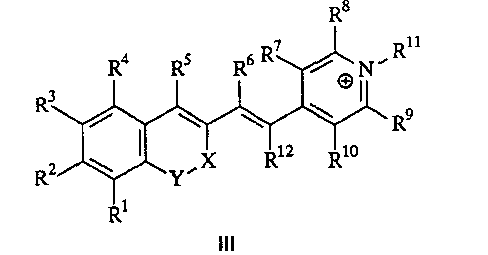
• wobei R¹ - R¹² gleich oder unterschiedlich sind und Wasserstoff, ein oder mehrere Chlor- und/oder Bromatome, Alkyl-, Aryl-, Heteroaryl-, Cycloalkyl-, Heterocycloalkyl-, Alkyloxy-, Alkylmercapto-, Aryloxy-, Arylmercapto-, Heteroaryloxy-, Heteroarylmercapto- oder Cyano-Reste, eine oder mehrere Hydroxy-, eine oder mehrere alkylsubstituierte oder cyclische Aminofunktionen sein können,
• einer oder mehrere der Substituenten R¹ - R¹² solubilisierende bzw. ionisierbare bzw. ionisierte Substituenten wie SO₃⁻, PO₃²⁻, CO₂⁻, O⁻, NR₃⁺, Cyclodextrin oder Zucker darstellen, die die hydrophilen Eigenschaften der Farbstoffe bestimmen, wobei diese Substituenten auch über eine aliphatische oder heteroaliphatische, möglicherweise zyklische Spacergruppe am eigentlichen Chromophor angebunden sein können,
• mindestens einer der Substituenten R¹ - R¹² für eine reaktive Gruppe vom Typ Isocyanat, Isothiocyanat, Hydrazin, Amin, Mono- und Dichlor- bzw. Mono- und Dibromtriazin, Aziridin, Sulfonylhalogenid, *N*-Hydroxysuccinimidester, Imido-Ester, Glyoxal oder Aldehyd bzw. Maleimid oder Iodacetamid sowie Phosphoramidit steht, wobei der jeweilige Substituent über eine aliphatische oder heteroaliphatische, möglicherweise zyklische Spacergruppe am eigentlichen Grundchromophor angebunden sein kann,
• R¹ und R² und/oder R³ und R⁴ und/oder R⁷ und R⁸ und/oder R⁹ und R¹⁰ weitere aliphatische oder aromatische Ringe bzw. zwei benachbarte Reste zusammen einen oder mehrere aliphatische oder aromatische Ringe bilden können,
• X-Y für die Strukturelemente -CR₂-O-, -O-CR₂-, -CO-O-, -O-CO-, -CO-NR- oder - NR-CO- stehen können, wobei R gleich oder unterschiedlich die Funktionen von R¹ - R¹² einnimmt, oder
• X-Y zusammen für ein Element aus der Gruppe O, S, Se, Te, oder das Strukturelement (CR₂)ₙ, NR oder SO₂ stehen können, wobei R gleich oder unterschiedlich die Funktionen von R¹ - R¹² einnimmt und n für 1 - 4 steht, und
• Z für die Gruppe C (CH₃)₂ steht.

2. Verbindungen gemäß Anspruch 1,
**dadurch gekennzeichnet, daß**
X-Y für die Strukturelemente CO-O- oder -O- steht.

3. Verbindungen gemäß Anspruch 1 oder 2,
**dadurch gekennzeichnet, daß**
R⁵ H, OH oder Alkoxy und/oder daß R¹¹ Carboxyalkyl bedeutet.

4. Verbindungen gemäß einem oder mehreren der Ansprüche 1 bis 3,
**dadurch gekennzeichnet, daß**
die aliphatische oder heteroaliphatische Spacergruppe aus einem Strukturelement-[(CH₂)ₐ-W-(CH₂)_{b}]_{c}- besteht, worin W gleich oder verschieden eine CR₂-, O-, S-, SO₂, SO₂NH-, NR-, CO₂- oder CONR- Funktion sein kann, wobei R die Funktionen von
R¹ - R¹² einnehmen kann und a und b gleich oder verschieden sind und die Werte von 0 - 18 und c die Werte von 1 - 18 darstellen.

5. Verwendung der substituierten Polymethin-Derivate der allgemeinen Formeln **I**-III gemäß einem oder mehreren der Ansprüche 1 bis 4 als Farbstoffe zur optischen Markierung von Proteinen, Nukleinsäuren, Oligomeren, DNA, RNA, biologischen Zellen, Lipiden, Mono-, Oligo- und Polysacchariden, Liganden, Rezeptoren, Polymeren, Pharmaka oder Polymerpartikeln.

6. Systeme zur qualitativen oder quantitativen Bestimmung von Proteinen, Nukleinsäuren, Oligomeren, DNA, RNA, biologischen Zellen, Lipiden, Polymeren, Pharmaka oder Polymerpartikeln, **dadurch gekennzeichnet, dass** die funktionellen Gruppen der Verbindungen nach einem oder mehreren der Ansprüche 1 bis 4 kovalent an eine HO-, H₂N- oder HS-Funktion der zu bestimmenden Substanzen gekoppelt werden.

7. System nach Anspruch 6,
**dadurch gekennzeichnet, daß**
die Kopplungsreaktion in organischen oder wässrigen Lösungen durchgeführt wird.

8. System nach Anspruch 6 oder 7,
**dadurch gekennzeichnet, daß**
die kovalent gekoppelte Verbindung fluoreszierende Eigenschaften aufweist.

9. Verwendung der Verbindungen und Systeme nach einem oder mehreren der Ansprüche 1 bis 8 in optischen, insbesondere fluoreszenzoptischen qualitativen und quantitativen Bestimmungsverfahren einschließlich Immuntests, Hybridisierungsverfahren, DNA-Sequenzierung, chromatographischen oder elektrophoretischen Verfahren und im Hoch-Durchsatz-Screening.

10. Verwendung der in einem oder mehreren der Ansprüche 1 bis 8 aufgeführten Verbindungen und Systeme zur Analyse von Rezeptor-Liganden-Wechselwirkungen auf einem Mikroarray.

## Claims

1. Compounds, especially marker dyes based on polymethines according to the general formulae I-III 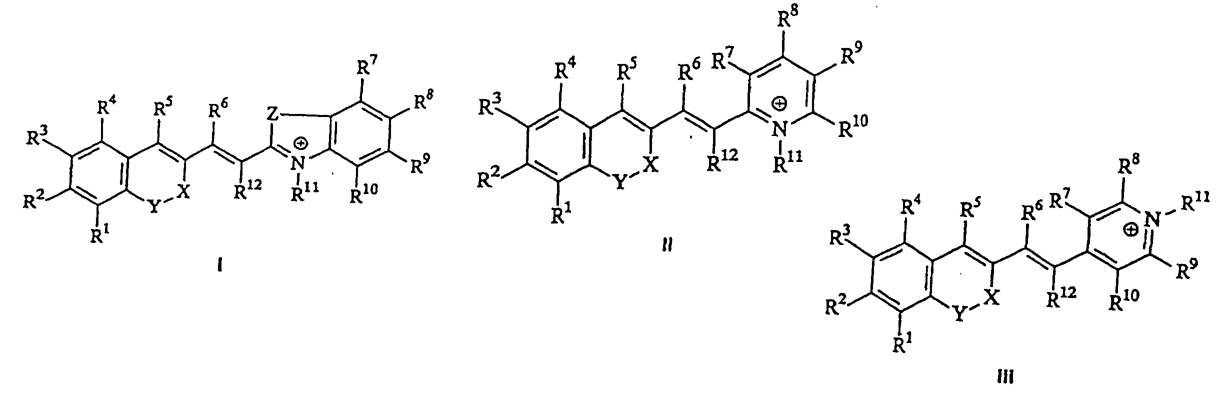
- wherein R¹ - R¹² are the same or different and can be hydrogen, one or more chlorine and/or bromine atoms, alkyl-, aryl-, heteroaryl-, cycloalkyl-, heterocycloalkyl-, alkyloxy-, alkylmercapto-, aryloxy-, arylmercapto-, heteroaryloxy-, heteroarylmercapto- or cyano- residues, one or more hydroxy-, one or more alkyl-substituted or cyclic amino functions,
- one or more of the substituents R¹ - R¹² represent solubilising or respectively ionisable or respectively ionised substituents such as SO₃⁻, PO₃²⁻, CO₂⁻, O⁻, NR₃⁺, cyclodextrine or sugars, which determine the hydrophilic properties of the dyes,
wherein these substituents can also be bound to the actual chromophoric group via an aliphatic or hetero-aliphatic, possibly cyclic spacer group,
- at least one of the substituents R¹ - R¹² denotes a reactive group of the type isocyanate, isothiocyanate, hydrazine, amine, mono- and dichloro- or respectively mono- and dibromotriazine, aziridine, sulfonyl halogenide, N-hydroxy succinimide ester, imido ester, glyoxal or aldehyde or respectively maleimide or iodoacetamide and phosphoramidite, wherein the respective substituent can also be bound to the actual fundamental chromophoric group via an aliphatic or hetero-aliphatic, possibly cyclic spacer group,
- R¹ and R² and/or R³ and R⁴ and/or R⁷ and R⁸ and/or R⁹ and R¹⁰ can form further aliphatic or aromatic rings or respectively two adjacent residues together can form one or more aliphatic or aromatic rings,
- X-Y can denote the structural elements -CR₂-O-, -O-CR₂-, -CO-O-, -O-CO-, -CO-NR- or -NR-CO-, wherein R being the same or different assumes the functions of R¹ - R¹², or
- X-Y together can denote an element from the group O, S, Se, Te, or the structural element (CR₂)ₙ, NR or SO₂, wherein R being the same or different assumes the functions of R¹ - R¹² and n denotes 1-4, and
- Z denotes the group C(CH₃)₂.

2. Compounds according to claim 1,
**characterised in that**
X-Y denotes the structural element CO-O- or -O-.

3. Compounds according to claim 1 or 2,
**characterised in that**
R⁵ denotes H, OH or alkoxy and/or that R¹¹ denotes carboxyalkyl.

4. Compounds according to one or more of claims 1 to 3,
**characterised in that**
the aliphatic or hetero-aliphatic spacer group consists of a structural element [(CH₂)ₐ-W-(CH₂)_{b}]_{c}-, wherein W, being the same or different, can be a CR₂-, O-, S-, SO₂-, SO₂NH-, NR-, CO₂- or CONR function, wherein R can assume the functions of R¹-R¹² and a and b are the same or different and represent values from 0 - 18 and c represents values from 1 - 18.

5. Use of the substituted polymethine derivatives of the general formulae I - III according to one or more of claims 1 to 4 as dyes for the optical marking of proteins, nucleic acids, oligomers, DNA, RNA, biological cells, lipids, mono-, oligo- and polysaccharides, ligands, receptors, polymers, pharmaceuticals or polymer particles.

6. Systems for the qualitative or quantitative determination of proteins, nucleic acids, oligomers, DNA, RNA, biological cells, lipids, polymers, pharmaceuticals or polymer particles,
**characterised in that**
the functional groups of the compounds according to one or more of claims 1 to 4 are coupled covalently to an HO-, H₂N- or HS-function of the substances to be determined.

7. System according to claim 6,
**characterised in that**
the coupling reaction is implemented in organic or aqueous solutions.

8. System according to claim 6 or 7,
**characterised in that**
the covalently coupled compound provides fluorescent properties.

9. Use of the compounds and systems according to one or more of claims 1 to 8 in optical, especially fluorescence-optical, qualitative and quantitative determination methods including immune tests, hybridisation processes, DNA-sequencing, chromatographic or electrophoretic methods and high-throughput screening.

10. Use of the compounds and systems specified in one or more of claims 1 to 8 for analysis of receptor-ligand interactions on a micro-array.

## Revendications

1. Composés, en particulier colorants marqueurs, à base de polyméthines de formules générales I à III : 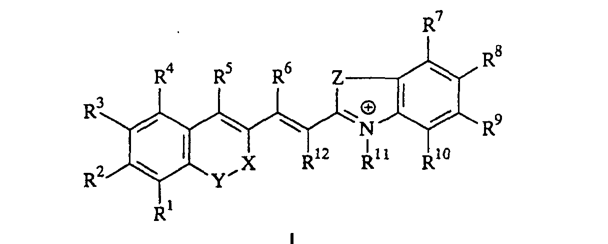 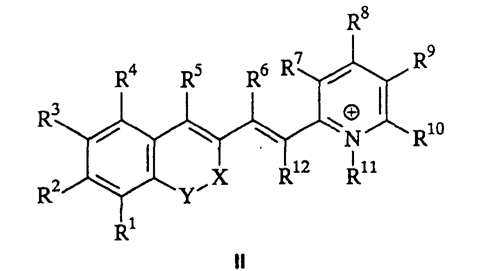 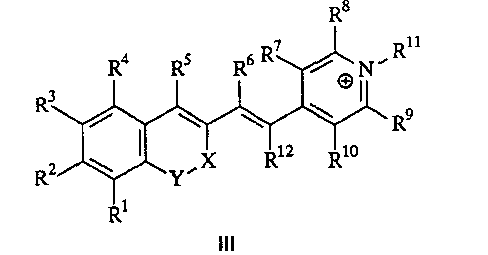
- R¹ à R¹¹ étant identiques ou différents, et pouvant être l'hydrogène, un ou plusieurs atomes de chlore et/ou de brome, des radicaux alkyle, aryle, hétéroaryle, cycloalkyle, hétérocycloalkyle, alkyloxy, alkylmercapto, aryloxy, arylmercapto, hétéroaryloxy, hétéroarylmercapto ou cyano, une ou plusieurs fonctions hydroxy, une ou plusieurs fonctions amino substituées par un alkyle ou cycliques,
- un ou plusieurs des substituants R¹ à R¹² représentant des substituants solubilisants ou ionisables ou ionisés comme SO₃⁻, PO₃⁻², CO₂⁻, O⁻, NR₃⁺, une cyclodextrine ou un sucre, qui déterminent les propriétés hydrophiles des colorants, ces substituants pouvant être également liés au chromophore caractéristique par un groupe espaceur aliphatique ou hétéroaliphatique, peut-être cyclique,
- au moins l'un des substituants R¹ à R¹² représentant un groupe réactif du type isocyanate, isothiocyanate, hydrazine, amine, mono- et dichloro- ou mono- et dibromotriazine, aziridine, sulfonylhalogénure, ester de *N*-hydroxysuccinimide, imido-ester, glyoxal ou aldéhyde et maléimide ou iodacétamide ainsi que phosphoramidite, le substituant respectif pouvant être lié au chromophore de base caractéristique par un groupe espaceur aliphatique ou hétéroaliphatique, peut-être cyclique,
- R¹ et R² et/ou R³ et R⁴ et/ou R⁷ et R⁸ et/ou R⁹ et R¹⁰ peuvent former d'autres cycles aliphatiques ou aromatiques ou deux groupes voisins peuvent former ensemble un ou plusieurs cycles aliphatiques ou aromatiques,
- X-Y peuvent représenter les éléments structuraux -CR₂-O-, -O-CR₂-, -CO-O-, -O-CO-, -CO-NR- ou -NR-CO, R, identique ou différent, occupant les fonctions de R¹ à R¹², ou
- X-Y ensemble peuvent représenter un élément du groupe O, S, Se, Te ou l'élément structural (CR₂)ₙ, NR ou SO₂, R, identique ou différent, occupant les fonctions de R¹ à R¹² et n représentant 1 à 4, et
- Z représente le groupe C(CH₃)₂.

2. Composés selon la revendication 1, **caractérisés en ce que** X-Y représentent les éléments structuraux CO-O- ou -O-.

3. Composés selon la revendication 1 ou 2, **caractérisés en ce que** R⁵ désigne H, OH ou un groupe alcoxy et/ou **en ce que** R¹¹ désigne un groupe carboxyalkyle.

4. Composés selon l'une ou plusieurs des revendications 1 à 3, **caractérisés en ce que** le groupe espaceur aliphatique ou hétéroaliphatique se compose d'un élément structural -[(CH₂)ₐ-W-(CH₂)_{b}]_{c}, où W, identique ou différent, peut être une fonction CR₂-, O-, S-, SO₂-, SO₂NH-, NR-, CO₂- ou CONR-, où R peut occuper les fonctions de R¹ à R¹² et a et b sont identiques ou différents et représentent les valeurs de 0 à 18 et c les valeurs de 1 à 18.

5. Utilisation des dérivés de polyméthine substitués de formules générales I à III selon l'une ou plusieurs des revendications 1 à 4 en tant que colorants pour le marquage optique de protéines, d'acides nucléiques, d'oligomères, d'ADN, d'ARN, de cellules biologiques, de lipides, de mono-, d'oligo- et de polysaccharides, de ligands, de récepteurs, de polymères, de médicaments ou de particules polymères.

6. Systèmes pour la détermination qualitative ou quantitative de protéines, d'acides nucléiques, d'oligomères, d'ADN, d'ARN, de cellules biologiques, de lipides, de polymères, de médicaments ou de particules polymères, **caractérisés en ce que** les groupes fonctionnels des composés selon l'une ou plusieurs des revendications 1 à 4 sont couplés de manière covalente à une fonction HO-, H₂N- ou HS- des substances à déterminer.

7. Système selon la revendication 6, **caractérisé en ce que** la réaction de couplage s'effectue dans des solutions organiques ou aqueuses.

8. Système selon la revendication 6 ou 7, **caractérisé en ce que** le composé couplé de manière covalente présente des propriétés fluorescentes.

9. Utilisation des composés et systèmes selon l'une ou plusieurs des revendications 1 à 8, dans des procédés de détermination optiques, en particulier des procédés de détermination qualitatifs et quantitatifs par principe optique de fluorescence, y compris les immunoessais, les procédés d'hybridation, le séquençage d'ADN, les procédés chromatographique et électrophorétique et le criblage à haut débit.

10. Utilisation des composés et systèmes mis en oeuvre dans l'une ou plusieurs des revendications 1 à 8, pour l'analyse des interactions récepteur-ligands sur un microarray.
